# EUROPEAN PATENT APPLICATION

(11) **EP 3 195 904 A1**
(43) Date of publication of application: **26.07.2017**
(21) Application number: 15841139.7
(22) Date of filing: 16.09.2015
(51) Int. Cl.: A62C 99/00, G09B 9/00

(54) **TEST UNIT FOR SIMULATING FIRES**

(30) Priority: 16.09.2014 ES 201431346
(71) Applicant: Mirasol Pérez-Estudillo, Antonio, 18015 Granada (ES); Mirasol Gieb, Enrique, 18193 Monachil (Granada) (ES)
(72) Inventor: Mirasol Pérez-Estudillo, Antonio, 18015 Granada (ES); Mirasol Gieb, Enrique, 18193 Monachil (Granada) (ES)
(74) Representative: Munoz Garcia, Antonio
(86) International application number: PCT/ES2015/070672
(87) International publication number: WO 2016/042191

(57) **Abstract**

The invention relates to a test unit for simulating fires, formed on the basis of an enclosure (1) in the form of a closed compartment with a floor, walls and ceiling made from reinforced concrete parts, which has an access area (2) located at one end of the enclosure (1), a central area (3) with side doors (4) and provided with an outflow passage (5) and one or more deflectors (6) for controlling the air and smoke, and a furnace area (7) covered in refractive material with a cleaning door (8) located at the opposite end of the enclosure (1). Said enclosure (1) incorporates temperature and smoke level probes (13), and all the electrical elements and probes (13) of the enclosure (1) are connected to a control panel (26) connected to a computer (28) that collects all the data supplied by such elements.

## Description

### OBJECT OF THE INVENTION

As expressed by the title of the present specification, the invention relates to a test unit for simulating fires which offers several novel features and advantages to its intended function that will be described in detail below and involve an improved alternative to systems known today for the same purpose.

More particularly, the object of the invention relates to an enclosure in the form of a compartment specially manufactured for causing fires therein, and through the control and measuring elements provided therein, studying the behavior of fire in different situations and to thereby provide a test tool for training and studying.

### FIELD OF APPLICATION OF THE INVENTION

The field of application of the present invention is comprised within the sector of industry dedicated to manufacturing simulated test spaces, particularly relating to the area of fire safety.

### PRIOR ART

The constant need for improvement and research in certain fields, specifically in studying the behavior of all the elements making up a fire in an enclosure that is either closed or has windows, as well as the development, stratification of temperatures, increases therein, distances of the source of ignition, gases produced, behavior thereof, ignition, movement and formation and behavior of the smoke produced inside a controlled enclosure, controlling the provision of the agent supporting combustion are the factors leading to the need to have a specific space for studying such parameters, taking into account that no such space strictly complying with said function is known today.

Therefore, the objective of the present invention is to develop a space where the effects and method of action of a fire can be studied, and by analyzing the consequences, it is further useful for including suitable equipment, thereby preparing members of the fire brigade, so that during an intervention, not only will they be more knowledgeable about the behavior of fire, but they will have performed practice sessions in a controlled manner. Therefore, a more realistic risk assessment and better preparation of professionals involved in an incident can be performed, resulting in greater benefit for all the parties involved as the safety of firefighters while performing their job is increased, and furthermore as the possibilities of saving lives is increased as a result of being better prepared.

In addition and as a reference to the current prior art, it must be mentioned that although the use of certain training spaces for both firefighters and for other safety services or brigades are known in which controlled fires are caused, the existence of a test unit for simulating fires or of any other invention having a similar application and having technical, structural and constitutive features similar to those that the unit herein proposed and claimed specifically has is unknown, at least on the part of the applicant.

### DISCLOSURE OF THE INVENTION

Therefore, the test unit for simulating fires proposed by the present invention is configured as a remarkable novelty within its field of application since, as a result of its implementation and in a specific manner, the objectives indicated above are satisfactorily met and the characterizing details making it possible and distinguishing it are suitably described in the final claims attached to the present specification.

Specifically, the invention proposes a test unit for simulating fires that is configured on the basis of a closed enclosure, whereby creating a space simulating a room in a living unit, the surface of which may vary but in a preferred embodiment has a surface area of about 26 m², and it can be closed entirely or have glazed windows.

The combustible material is located in walls and ceilings, consisting of wood boards, as if they were furniture in a living unit, and the focal point of the fire will be inside the enclosure, taking up 6 m² so that the suitable environment in terms of fire, temperature, smoke and real gases can thereby be recreated as if it was a real living unit.

It will provide the real circumstances of a fire and the possibility of studying and analyzing it and of its development, circumstances and temperatures reached at the height of interest from the floor level. Accessibility could be studied by means of real studies and simulations and with the means and equipment suited to each case. Oxygen and smoke levels could be studied, and it is possible to find out, for example, how long a person can stay alive in the course of development of a fire, depending on the temperature, smoke and oxygen existing at a level no higher than a given height from the floor.

Should the enclosure have a window, possibly being a window with a 6 mm pane of glass or 4 mm double pane of glass, another different type of fire could be studied when the window breaks, which will require a larger amount of the agent supporting combustion, different studies and analyses, and therefore different work methods for fighting and extinguishing said fire.

It must be pointed out that the mentioned enclosure constituting the test unit of the invention is made with reinforced concrete parts 12 cm thick, which show a better behavior than iron or other materials in the event of the increases in temperature and which, after 200°, start to undergo different transformations and show a different behavior than what occurs in reality.

The use of said reinforced concrete furthermore provides a longer service life than metal does, better assembly conditions, greater safety in practice sessions, and most importantly, it allows sensors to be inserted therein, which is impossible with metal.

Continuing with the particularities of the enclosure constituting the proposed test unit, it should be pointed out that said enclosure is optionally provided with as a safety system water nozzles as well as a system that can be connected to a tanker truck, the supply system or a tank.

According to another feature of the invention, the enclosure is equipped with elements that allow controlling and working directly with the smoke, whereby obtaining two important benefits: on one hand, actually working with smoke, and on the other getting personnel to become more comfortable with smoke conditions, because smoke is one of the most important elements of a fire and in certain types of fire, it is extremely important to know how to deal with it. It should be pointed out that said elements can also be applied for controlling the use of gases in the simulation.

Finally, it should be pointed out that though not in a limiting manner, the enclosure of the unit is preferably configured from a plurality of modules connected to one another, thereby making it easier to eventually move them to different practice areas, because both the dimensions and weight of the elements to be transported are thereby reduced.

The described test unit for simulating fires therefore represents an innovative structure having structural and constitutive features that were unknown until now for its intended purpose. These reasons combined with the practical usefulness of the invention provide sufficient grounds for being granted the exclusive right that is sought.

### DESCRIPTION OF THE DRAWINGS

To complement the description that is being made and for the purpose of helping to better understand the features of the invention, a set of drawings is attached to the present specification as an integral part thereof, wherein the following is depicted with an illustrative and non-limiting character:
Figures 1 and 2 show, respectively, a side elevational view and a plan view of an embodiment of the test unit for simulating fires, object of the invention, its general configuration and the parts and elements it comprises, as well as the arrangement thereof being seen therein. Figure 1 only shows the elevational view of the enclosure which said unit has, whereas Figure 2 schematically depicts, in addition to the plan view of the enclosure, a plan view of the control hut which the proposed test unit also has.
Figures 3, 4, 5, 6, 7-A and 7-B show, in respective perspective views, each of the modules into which the enclosure constituting the test unit of the invention are optionally divided, and which additionally determine in an approximate manner the different areas that said enclosure has.
Figures 8 and 9 show, in respective schematic perspective depictions, the operation of the levers moving the deflectors and the outflow passage, respectively.
Figure 10 shows a perspective view of the detail of the outflow passage, showing the frame and the cover forming it.
Figures 11 and 12 show, in respective perspective views, respective fragments of the partition of the unit and of the cleaning door which the enclosure has, showing the different layers of material with which both elements are formed.

### PREFERRED EMBODIMENT OF THE INVENTION

In view of the mentioned drawings and according to the numbering used, a preferred, non-limiting embodiment of the test unit for simulating fires object of the invention can be seen in said drawings, said test unit comprising the parts and elements indicated and described in detail below.

As can be seen in said drawings, the unit at hand is formed on the basis of an enclosure (1) in the form of a closed compartment, preferably having a rectangular configuration with a floor, walls and ceiling made from reinforced concrete parts 12 cm thick which, being formed by a single body or from several modules (1 a, 1 b, 1 c, 1 d, 1 e) connected to one another, has an access area (2) located at one end of the enclosure (1), a central area (3) with several side doors (4) and provided with an outflow passage (5) and one or more deflectors (6) as elements for controlling the air and smoke, and a furnace area (7) covered in refractive material and with a cleaning door (8) located at the opposite end of the enclosure (1).

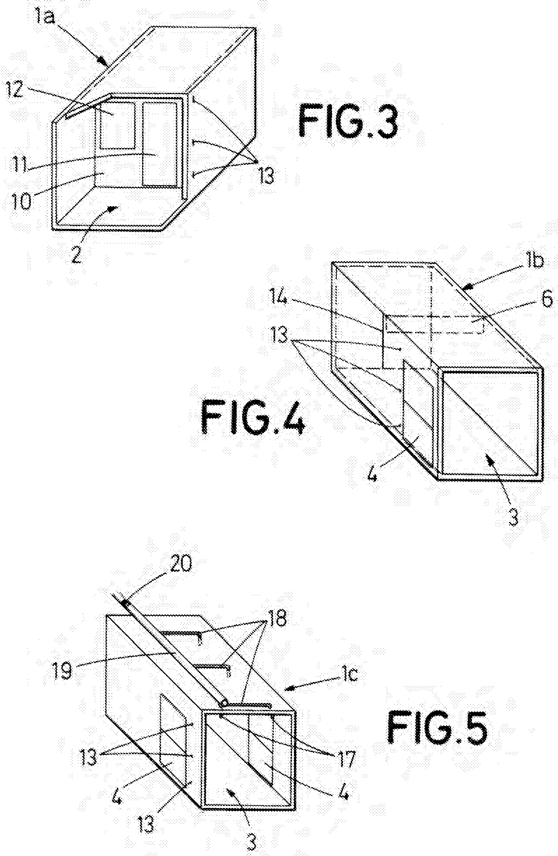

As seen in Figure 3, showing a partially sectioned perspective view of a first module (1a) into which the enclosure can be divided, the access area (2), which is accessed through respective access doors (9), has a separating partition (10) separating said access area (2) from the central area (3) of the enclosure, a wood door (11) and preferably a window (12) as well having been provided therein.

Said partition (10) is a concrete partition that is 10 cm thick; the wood door (11) is manually and electrically operated and is manufactured such that it withstand up to two hours in a fire, in accordance with the fire protection standard; and the window (12) is glazed with thermal glass, such that it allows observing the inside of the enclosure. This access area (2) provides a space that allows studying and analyzing what happens in a room located away from the focal point of a fire, through a door closed, depending on the temperature and amount of smoke.

It is important to point out that the incorporation of three temperature and smoke level probes (13), located a certain distance from the door and vertically distributed at different heights from the floor, has been envisaged.

Figures 4, 5 and 6 show, respectively, a second module (1b), a third module (1c) and a fourth module (1d) into which the enclosure (1) is optionally divided and which, in turn, approximately correspond with the central area (3) of said enclosure (1), this being the space in which the fire development studies are performed.

The existence of several side doors (4) on both sides of the enclosure (1) has been envisaged in said central area (3), each of which doors (4), with a width of 1 m, is horizontally split into two portions that can be opened independently of one another or at the same time. These side doors (4) are used to change the conditions of development of the fire and accordingly collect new data due to the provision of an agent supporting combustion, said doors (4) also being useful as an evacuation path at a given time.

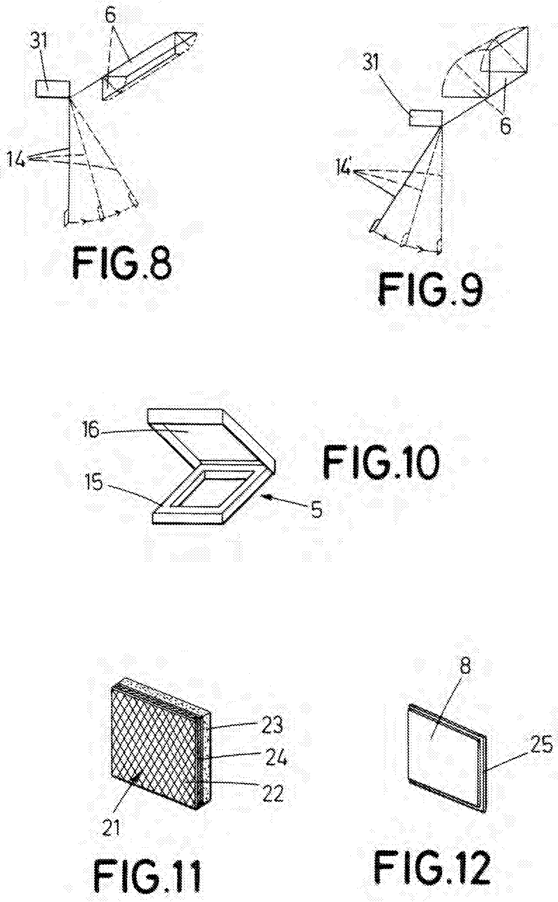

Likewise, this central area (3) of the enclosure (1) has one or two deflectors (6) which are fixed in the ceiling thereof and when operated, they allow moving the air therein, said operation being both electric and manual through an external lever (14) that is suitably linked to same, as shown in Figure 8.

Furthermore, and also next to the separating partition (10) of the first module (1 a), there are also provided in this central area (3) groups of vertically arranged probes (13), specifically located close to the side doors (4) and at the same height as those mentioned above. Preferably, said groups of probes (13) are all located on one and the same side of the enclosure (1).

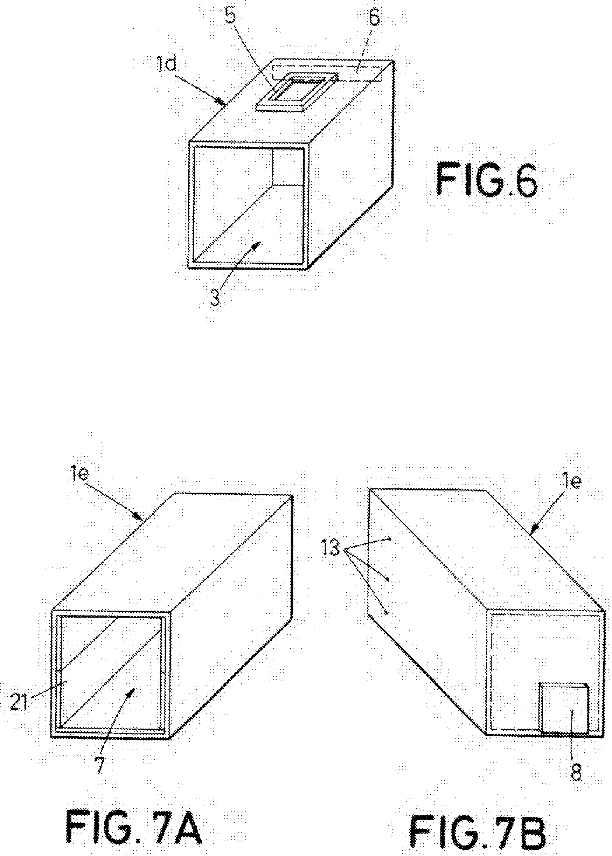

Finally, an upper opening or outflow passage (5) has been provided in this central area (3), preferably in the fourth module (1d) of those modules optionally forming the enclosure (1) seen in Figure 6, said upper opening or outflow passage (5) having approximate dimensions of 1 x 1 m and a closure with electrical and manual control through another external lever (14') the operation of which shown in Figure 9 is also similar to the operation of the deflectors (6). As shown in Figure 10, this outflow passage (5) consists of a frame (15) and a mobile cover (16) fitting on said frame, useful for controlling the level of smoke produced inside the enclosure, as well as for checking the temperature levels produced in said enclosure.

The second deflector (6) is arranged a short distance from this outflow passage (5) also for being able to move the air inside the enclosure and observe, by means of the probes, how the temperature is stratified. As seen in Figures 9 and 10, both the deflectors (6) and the outflow passage (5) incorporate a motor (31) connected to the operation levers (14, 14') for operating same.

In addition, it should be pointed out that as shown in the example of Figure 5, the enclosure optionally has a water spraying system for putting out fires which comprises the incorporation of a series of nozzles (17) connected by means of corresponding branch ducts (18) to a pipe (19) which, attached in the different modules by means of flexible connections (20), is connected to a water tank or to the intake point of the supply system.

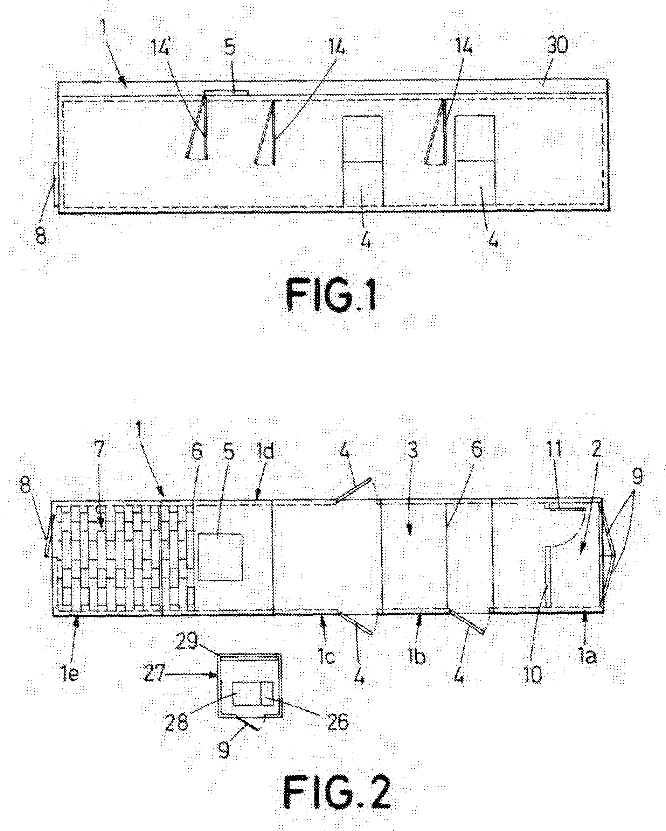

Figures 7-A and 7-B show front and rear perspective views of a final or fifth module (1 e) into which the enclosure (1) is divided in the preferred embodiment of the invention, corresponding with the furnace area (7), which can also be seen in Figure 2. In this area, all the faces of the enclosure (1) are covered in refractive material, and the enclosure (1) has a rib (21) at the level of about 1 m for placing boards being used as combustible material in the fire simulation. These boards (not depicted) are arranged such that they are either secured by means of concrete beams protected with fire-resistant material, or inserted behind a mesh (22) which, as shown in Figure 11, is separated from the concrete face (23) and acts like lattice, behind which there is a gap (24) for placing said boards or other elements, at the same time being useful for checking the characteristics and response to the fires of the fire-resistant protective materials used in the construction.

At the rear end of the enclosure, this furnace area (7) has a cleaning door (8) that is opened manually and provides access to the focal point of the fire or furnace where the combustion of the materials takes place, another group of vertically arranged probes (13) also having been provided in this last section of the enclosure. As seen in Figure (12), this cleaning door (8) is made of concrete and has an angle iron (25) along the entire perimeter thereof.

Continuing with the features of the invention, it must be pointed out that all the electrical elements the enclosure comprises are connected to a control panel (26) located in a hut (27), which is arranged attached to the enclosure (1) or is arranged at another independent location away from said enclosure (1). Likewise, the probes (13) are also connected to said control panel, which is in turn connected to a computer (28) that collects all the data supplied by such elements. Furthermore, and where the unit has the aforesaid spraying system, the existence of an electrovalve opening all the nozzles (17) distributed throughout all the areas of the enclosure (1) is contemplated for being able to put the fire out at the discretion of the person responsible for the simulator.

This hut (27), which is entirely independent of the enclosure (1), is formed by a concrete module with closed faces and an access door, and in case of being arranged attached to said enclosure, it may have a front face (29) formed by a meter-high concrete transom and pane of glass closing the rest of the face, having and electrical outlet and air conditioning system.

It must finally be pointed out that both the enclosure (1) and the control hut (27) have a galvanized sheet metal roof (30), being a single pitch roof with a slope of about 2%.

Having sufficiently described the nature of the present invention as well as the way of putting it into practice, it is not considered necessary to provide further explanation so that a person skilled in the art will understand its scope and the advantages derived from it. Furthermore, it must be stated that the invention may be carried out to practice within its essential features in other embodiments differing in detail from the embodiment indicated by way of example, and such embodiments will also be covered by the protection that is sought provided that the fundamental principle of the invention is not changed, altered or modified.

## Claims

1. A test unit for simulating fires which, being applicable for studying the behavior of fire in different situations and providing a training and study tool, is **characterized by** being formed on the basis of an enclosure (1) in the form of a closed compartment with a floor, walls and ceiling made from reinforced concrete parts, which has an access area (2) located at one end of the enclosure (1), a central area (3) with side doors (4) and provided with an outflow passage (5) and one or more deflectors (6) for controlling the air and smoke, and a furnace area (7) covered in refractive material with a cleaning door (8) located at the opposite end of the enclosure (1); **in that** said enclosure (1) incorporates temperature and smoke level probes (13); and **in that** all the electrical elements and probes (13) of the enclosure (1) are connected to a control panel (26) connected to a computer (28) that collects all the data supplied by such elements.

2. The test unit for simulating fires according to claim 1, **characterized in that** the enclosure (1) is formed on the basis of several modules (1 a, 1 b, 1 c, 1 d, 1 e) connected to one another.

3. The test unit for simulating fires according to claim 1 or 2, **characterized in that** the access area (2), which is accessed through respective access doors (9), has a concrete partition (10) separating said access area (2) from the central area (3) of the enclosure, a wood door (11) having been provided therein.

4. The test unit for simulating fires according to claim 3, **characterized in that** the separating partition (10) also has a window (12).

5. The test unit for simulating fires according to any of claims 1 to 4, **characterized in that** the probes (13) are distributed throughout the entire enclosure (1) arranged in groups, vertically distributed at different heights from the floor.

6. The test unit for simulating fires according to any of claims 1 to 5, **characterized in that** each of the side doors (4) is horizontally split into two portions that can be opened independently of one another or at the same time.

7. The test unit for simulating fires according to any of claims 1 to 6, **characterized in that** the deflectors (6) are fixed in the ceiling of the enclosure and are electrically and manually operated through an external lever (14).

8. The test unit for simulating fires according to any of claims 1 to 7, **characterized in that** the outflow passage is an opening in the upper part of the central area (3) of the enclosure (1), with approximate dimensions of 1 x 1 m and having a closure with electrical and manual control through another external lever (14').

9. The test unit for simulating fires according to any of claims 1 to 8, **characterized in that** the furnace area (7) has a rib (21) at the level of about 1 m for placing boards used as combustible material in the fire simulation.

10. The test unit for simulating fires according to claim 9, **characterized in that** in the rib (21) there is provided a mesh (22) that is separated from the concrete face (23) and acts like lattice behind which there is a gap (24) for placing the boards or other elements.

11. The test unit for simulating fires according to any of claims 1 to 10, **characterized in that** the cleaning door (8) is made of concrete and has an angle iron (25).

12. The test unit for simulating fires according to any of claims 1 to 11, **characterized in that** the enclosure (1) has a water spraying system comprising the incorporation of nozzles (17) connected, by means of branch ducts (18), to a pipe (19) which is in turn connected to a water tank or to the intake point of the supply system.

13. The test unit for simulating fires according to claim 12, **characterized in that** there is an electrovalve opening all the nozzles (17) distributed throughout all the areas of the enclosure (1).

14. The test unit for simulating fires according to any of claims 1 to 13, **characterized in that** the control panel (26) is located in a hut (27) formed by a concrete module with closed faces and an access door, which is arranged attached to the enclosure (1) or is arranged at another point located away from same, in any case entirely independent of the enclosure (1).

15. The test unit for simulating fires according to claim 14, **characterized in that** should the hut (27) be arranged attached to the enclosure, it has a front face (29) formed by a meter-high concrete transom and pane of glass closing the rest of the face.

16. The test unit for simulating fires according to claims 1 and 14, **characterized in that** the enclosure (1) and the control hut (27) have a galvanized sheet metal roof (30), being a single pitch roof with a slope of about 2%.
